# EUROPEAN PATENT APPLICATION

(11) **EP 4 667 368 A1**
(43) Date of publication of application: **24.12.2025**
(21) Application number: 25183357.0
(22) Date of filing: 17.06.2025
(51) Int. Cl.: B64U 70/70

(54) **DEVICES, SYSTEMS, AND METHODS FOR LAUNCHING AERIAL VEHICLES**

(30) Priority: 17.06.2024 US 202463660810 P
(71) Applicant: Advanced Technology & Research Corporation, Beltsville, MD 20705 (US)
(72) Inventor: EDWARDS, Thomas, Beltsville, 20705 (US); HART, David, Beltsville, 20705 (US)
(74) Representative: Brantsandpatents bv

(57) **Abstract**

Disclosed herein are devices, systems, and methods for launching or setting in motion an aerial vehicle. Specifically disclosed are launch devices and systems for unmanned aerial vehicles that include a track, a carriage for moving the unmanned aerial vehicle along the track, an energy storage and/or transmission unit (e.g., one or more flywheels), and a drivetrain assembly.

## Description

### STATEMENT REGARDING FEDERALLY SPONSORED RESEARCH OR DEVELOPMENT

The invention described herein was made with U.S. government ("Government") support under Contract Nos. N68335-21-C-0041 and N68335-22-C-0117, awarded by the U.S. Naval Air Warfare Center Aircraft Division. As a result, the Government has certain rights in this invention.

### CROSS-REFERENCE TO RELATED APPLICATION

This application claims the benefit of U.S. Provisional Application No. 63/660,810, filed June 17, 2024, which is hereby incorporated by reference in its entirety.

### FIELD

The disclosure relates generally to devices, systems, and methods for launching or setting in motion a fixed wing aerial vehicle. In particular, the disclosure relates to a launch system for a fixed wing unmanned aerial vehicle ("UAV").

### BACKGROUND

Unmanned aerial vehicles, commonly known as "drones," are increasingly used in a wide variety of applications and fields, including diverse military usages, commercial activities (e.g., package delivery drones), civilian mapping activities, and recreational activities. Many smaller UAVs capable of vertical take-off and landing (VTOL) feature multiple horizontal rotors similar to helicopters. However, fixed-wing (FW) and similar swing-wing air vehicles enjoy fundamental advantages in airspeed, payload capacity, fuel efficiency and endurance that make them the clear choice for many applications, particularly in larger sizes. Thus far, hybrid air vehicles combining vertical take-off and fixed wing flight by tilt-rotors or other means have proven difficult to control and unreliable in the transition from vertical flight, and are relatively uncommon.

A fundamental limitation of fixed wing aircraft is that their engines do not provide sufficient thrust to reach take-off speeds without a long runway. Runways are typically 4,000-10,000 feet long to assure take-off velocity is reached. Runways are expensive to build and maintain, and, in a military context, are highly vulnerable to enemy attack. If a much shorter take-off distance is desired or required, a way to add large amounts of energy to the manned aircraft or UAV must be employed. These methods are generically called "catapults." Currently, catapults are used to address runway limitations on the decks of military aircraft carriers. Compressed air ("pneumatic") catapults have existed on aircraft carriers for approximately a century. Steam-driven catapults have existed for about 70 years, and electromagnetic catapults were first built about a decade ago. However, all such catapults suffer from various limitations. For instance, all such catapults require large, very expensive, and in the case of electromagnetics, environmentally sensitive, built-in infrastructure. Modern catapults attempt to carefully control the rate at which energy is transmitted into the air vehicle, so as not to damage the vehicle or its contents. Pneumatic launchers (which are also referred to as "catapults" herein) and/or hydraulic propulsion are routinely utilized to launch FW UAVs in sizes above what a person could hand-launch, up to somewhere in the 750 pound range. A fundamental characteristic of pneumatic catapults is the very high accelerations imparted to the aircraft by the expanding compressed air at the start of the launch event, and lower energy imparted later in the launch "stroke." Hydraulic propulsion is a similar technique, offering somewhat better control of acceleration, but with negative trade-offs, such as requiring a considerable body of equipment to generate the necessary power, and quantities of environmentally unfriendly hydraulic fluid.

Energy may also be added to a FW UAV by means of detachable and expendable rocket bottles. This is known as "rocket-assisted take off" (RATO). RATO launches are characterized by a short, high-acceleration boost to the aircraft. However, this method is very expensive per launch and demands a carefully organized logistics supply chain, due to the safety risks inherent in explosive rockets.

Generally, catapults feature a launch rail or track to contain and guide the UAV during its acceleration to take-off velocity, with the exception of launches along aircraft carrier decks and RATO launches. This is the case regardless of whether the UAV has wheels (landing gear) or not. The launch rail or track must contain a connection to the added power source for moving the UAV along the rail, and an interface, typically a carriage, to connect the kinetic energy source embedded in the rail to the UAV for the duration of the launch event. Launch rails can range from about 10 feet (e.g., for lighter and more robust UAVs) to upwards of 50 feet (e.g., for heavier and more delicate UAVs).

Practically without exception, each rail or track launchable UAV comes with its own unique launcher, customized for the dimensions, weight, airframe design, sturdiness and other characteristics of the UAV. Military and other users of multiple types of UAVs must therefore provision themselves with multiple types of launchers. This has become a significant drawback as UAVs proliferate in types and quantity. A launcher able to handle a wide range of UAV types has become desirable as UAV applications have expanded.

The process for launching or setting in motion UAVs may be complex and expensive, especially in the case of larger UAVs that can be used for military applications, such as intelligence, surveillance and reconnaissance (ISR), electronic warfare, and warfare with kinetic weaponry. Such UAVs may require complex systems in order to successfully launch at a desired velocity and/or acceleration. In addition, military doctrine currently favors the development of UAV swarms, i.e. multiple UAVs acting in concert, which would require the launch of multiple UAVs in rapid succession.

Given the foregoing, there exists a significant need for devices, systems, and methods that can be used for launching or setting in motion a fixed wing unmanned aerial vehicle, e.g., of large sizes (known as Group 5 UAVs) and medium sizes (known as Group 3 UAVs).

### SUMMARY

It is to be understood that both the following summary and the detailed description are exemplary and explanatory and are intended to provide further explanation of the invention as claimed. Neither the summary nor the description that follows is intended to define or limit the scope of the invention to the particular features mentioned in the summary or in the description.

In certain embodiments, the disclosed embodiments may include one or more of the features described herein.

In general, the present disclosure is directed to devices, systems, and methods for launching or setting in motion a fixed wing aerial vehicle without a conventional runway. In particular, launch devices, systems, and methods are disclosed for runway-less launching unmanned aerial vehicles ("UAVs"), including, in some embodiments, UAVs weighing as little as 250 pounds (Group 3 UAVs) and UAVs weighing up to 10,000 pounds (Group 5 UAVs), sequentially over a short period of time.

Some embodiments of the disclosed systems, methods, and devices use catapult power sources and power transmission methods to: (1) propel or assist in propelling medium and large (e.g., about 300-10,000 pound FW UAVs) to their take-off velocities within a few hundred feet or less without a conventional runway, (2) offer control over acceleration during the launch event, (3) be low-cost per use, (4) be suitable for launching UAVs at a rapid tempo, (5) be inexpensive and easy to maintain at the system level, (6) be flexible enough to launch a variety of UAV types, and/or (7) be compact in size, transportable, and amenable to deployment in locations of opportunity, such as expeditionary land environments and on ships.

In at least one embodiment, a launch device and/or system is referred to herein as a "Modular Kinetic Launch System" ("MKLS"). The novel and salient aspects of the MKLS include, for example, its power source and power transmission methods. Other elements of the MKLS that are necessary to perform the launch function are designed to meet specific needs of its power system and the intended uses of the complete MKLS system, and may in some embodiments comprise commercial-off-the-shelf or otherwise well-known parts.

In at least one embodiment, the launch system comprises one or more energy storage units, e.g., one or more flywheels, and a transmission unit, e.g., a drivetrain assembly. The flywheel enables storage of the amount of energy necessary to accelerate and/or launch one or more UAVs. The drivetrain assembly transmitting the energy may comprise an auxiliary assist motor, one or more friction clutches, one or more torque converters, and a launch drum which spools up a cable transmitting the energy to the launch rail and UAV carriage. The auxiliary assist motor could be directly connected to the drum shaft or could be connected through a clutch depending on the type of motor and the motor characteristics. Non-limiting examples of such an auxiliary assist motor will be described below herein. A single sub-shaft can be used for each of the friction clutch and/or torque converter. Alternatively, the friction clutches and torque converters may be split into a plurality of sub-shafts. The drivetrain assembly may further comprise an auxiliary clutch that bypasses the torque converters and may allow more precise application of torque based on the pressure applied at the clutch.

Such a launch system may comprise a loading ramp connected to a track. A carriage is used to carry a UAV up the loading ramp and along the track, wherefrom the UAV is accelerated and launched. The launch system may be disposed on land or on the surface of any vehicle or craft for launching UAVs (e.g., a ship, boat, aircraft carrier, etc.). The track enables movement of the carriage and the UAV, provides structural support for the carriage and/or UAV, and may be of any length necessary for launching the UAV at a pre-determined launch velocity.

In at least one embodiment, a lift system is attached and/or physically connected to one or more portions (e.g., an underside) of the track. The lift system can control the elevation of one or more sections of the track, and may be powered by one or more power sources to raise and/or lower the one or more sections of the track vertically relative to a surface on which the launch system is disposed. In at least one embodiment, a telescoping beam can rotate one or more sections of the track, and can be powered by one or more power sources to move and/or rotate one or more sections of the track outboard on a vessel or vehicle relative to the surface on which the launch system is disposed.

In at least one embodiment, a braking system is disposed on the track to slow down and/or stop the carriage after the UAV has been launched.

In at least one embodiment, a system for launching an unmanned aerial vehicle is disclosed. The system comprises: a flywheel for storing energy, a motor (e.g., an electric motor, a hydraulic motor, or any other suitable motor) for powering the flywheel, a drum for reeling in a cable attached to the drum, to apply force to accelerate the unmanned aerial vehicle, and a power transmission system for transferring energy stored by the flywheel to the drum.

In at least one embodiment, the cable attaches to one or more landing gears of the unmanned aerial vehicle.

In at least one embodiment, the cable attaches to a platform for supporting the unmanned aerial vehicle, and wherein the platform has wheels.

In at least one embodiment, the cable attaches to a carriage physically disposed on a track, and wherein the carriage is for supporting the unmanned aerial vehicle before and during launch.

In at least one embodiment, the system further comprises a measurement device to directly measure a speed of the carriage.

In at least one embodiment, the system further comprises at least one computer comprising at least one processor, wherein the at least one processor is operatively connected to at least one non-transitory, computer readable medium having computer-executable instructions stored thereon, wherein, when executed by at least one processor, the computer-executable instructions carry out a set of steps comprising: determining, based on the measured speed of the carriage, whether the carriage will reach a pre-determined launch velocity for the unmanned aerial vehicle at a pre-determined point or area along the track. In at least one embodiment, the system further comprises an encoder (e.g., a linear encoder) on the drum for measuring winch rotations and for estimating a position of a carriage supporting the unmanned aerial vehicle before and during launch.

In at least one embodiment, the system further comprises a spin-up motor for spinning up, and inputting the energy into, the flywheel. In at least one example, the spin-up motor has about 10 horsepower to 500 horsepower, including, for instance about 10 horsepower to about 20 horsepower, about 20 horsepower to about 200 horsepower, about 200 horsepower to about 500 horsepower, or any other range therein.

In at least one embodiment, only a portion of energy stored by the flywheel is used to launch the unmanned aerial vehicle.

In at least one embodiment, the aforementioned power transmission system comprises one or more clutches and one or more torque converters. In at least one example, the one or more clutches are operated via an air supply and one or more valve and booster systems. In at least an additional example, the one or more torque converters are passive and act as an open-loop control.

In at least one embodiment, a single shaft operates the one or more clutches, and the one or more torque converters are operated by either (i) a single sub-shaft, or (ii) a plurality of sub-shafts. In at least one example, only a subset of the plurality of sub-shafts are actuated to launch the unmanned aerial vehicle. In at least one embodiment, the one or more clutches apply torque across a slip junction until a first point is reached where an input speed matches an output speed. In at least one example, at the first point: (i) the one or more clutches lock and act as a power transmission shaft, (ii) adding pressure to the one or more clutches does not change applied power, and (iii) removing pressure from the one or more clutches does not change the applied power until the one or more clutches disengage.

In at least one embodiment, the one or more clutches comprises one or more primary drive clutches and an auxiliary clutch. In at least one example, the auxiliary clutch is configured to bypass the one or more torque converters to permit application of torque based on an amount of pressure applied at the auxiliary clutch.

In at least one embodiment, the system further comprises an auxiliary assist motor connected to the drum, to assist in powering the drum.

In at least one embodiment, the unmanned aerial vehicle weighs between about 250 pounds and about 10,000 pounds.

In at least one embodiment, a system for launching an unmanned aerial vehicle is disclosed. The system comprises: a cable for connecting to the unmanned aerial vehicle, a cable-pulling device for pulling the cable, a power transmission system for transmitting energy to the cable-pulling device, and at least one computer comprising at least one processor, wherein the at least one processor is operatively connected to at least one non-transitory, computer readable medium having computer-executable instructions stored thereon, wherein, when executed by the at least one processor, the computer-executable instructions carry out a set of steps comprising: controlling the power transmission system, to transmit energy to the cable-pulling device until the unmanned aerial vehicle connected to the cable reached a pre-determined point or area of a runaway and then cause the cable to disconnect from the unmanned aerial vehicle.

In at least one embodiment, the pre-determined point or area of the runway is about 500 feet to 1,500 feet from a starting point of the unmanned aerial vehicle. In at least one embodiment, the device accelerates the unmanned aerial vehicle at a force of at least twice the unmanned aerial vehicle's internal propulsion mechanism.

Therefore, based on the foregoing and continuing description, the subject invention in its various embodiments may comprise one or more of the following features in any non-mutually-exclusive combination:
One or more systems for launching an unmanned aerial vehicle;
Any of the one or more systems comprising a flywheel for storing energy;
Any of the one or more systems comprising a motor for powering the flywheel;
Any of the one or more systems comprising a drum for reeling in a cable attached to the drum, to apply force to accelerate the unmanned aerial vehicle;
Any of the one or more systems comprising a power transmission system for transferring energy stored by the flywheel to the drum;
The cable attaches to one or more landing gears of the unmanned aerial vehicle;
The cable attaches to a platform for supporting the unmanned aerial vehicle;
The platform having wheels;
The cable attaches to a carriage physically disposed on a track;
The carriage is for supporting the unmanned aerial vehicle before and during launch;
Any of the one or more systems comprising a measurement device to directly measure a speed of the carriage;
Any of the one or more systems comprising at least one computer comprising at least one processor, wherein the at least one processor is operatively connected to at least one non-transitory, computer readable medium having computer-executable instructions stored thereon, wherein, when executed by at least one processor, the computer-executable instructions carry out a set of steps comprising: determining, based on the measured speed of the carriage, whether the carriage will reach a pre-determined launch velocity for the unmanned aerial vehicle at a pre-determined point or area along the track;
Any of the one or more systems comprising an encoder (e.g., a linear encoder) on the drum for measuring winch rotations and for estimating a position of a carriage supporting the unmanned aerial vehicle before and during launch; Any of the one or more systems comprising a spin-up motor for spinning up, and inputting the energy into, the flywheel;
The spin-up motor having about 10 horsepower to about 500 horsepower (e.g., about 10 horsepower to about 20 horsepower, about 20 horsepower to about 200 horsepower, about 200 horsepower to about 500 horsepower, or any other range therein);
Only a portion of energy stored by the flywheel being used to launch the unmanned aerial vehicle;
The power transmission system comprising one or more clutches and one or more torque converters;
The one or more clutches being operated via an air supply and one or more valve and booster systems;
The one or more torque converters being passive and acting as an open-loop control;
A single shaft operating the one or more clutches;
The one or more torque converters being operated by either (i) a single sub-shaft, or (ii) a plurality of sub-shafts;
Only a subset of the plurality of sub-shafts being actuated to launch the unmanned aerial vehicle;
The one or more clutches applying torque across a slip junction until a first point is reached where an input speed matches an output speed;
At the first point: (i) the one or more clutches lock and act as a power transmission shaft, (ii) adding pressure to the one or more clutches does not change applied power, and (iii) removing pressure from the one or more clutches does not change the applied power until the one or more clutches disengage; The one or more clutches comprising one or more primary drive clutches and an auxiliary clutch;
The auxiliary clutch being configured to bypass the one or more torque converters to permit application of torque based on an amount of pressure applied at the auxiliary clutch;
Any of the one or more systems comprising an auxiliary assist motor connected to the drum, to assist in powering the drum;
The unmanned aerial vehicle weighing between about 250 pounds and about 10,000 pounds;
Any of the one or more systems comprising a cable for connecting to the unmanned aerial vehicle;
Any of the one or more systems comprising a cable-pulling device for pulling the cable;
Any of the one or more systems comprising a power transmission system for transmitting energy to the cable-pulling device;
Any of the one or more systems comprising at least one computer comprising at least one processor, wherein the at least one processor is operatively connected to at least one non-transitory, computer readable medium having computer-executable instructions stored thereon, wherein, when executed by the at least one processor, the computer-executable instructions carry out a set of steps comprising: controlling the power transmission system, to transmit energy to the cable-pulling device until the unmanned aerial vehicle connected to the cable reached a pre-determined point or area of a runaway and then cause the cable to disconnect from the unmanned aerial vehicle;
The pre-determined point or area of the runway being about 500 feet to 1,500 feet from a starting point of the unmanned aerial vehicle; and
The device accelerating the unmanned aerial vehicle at a force of at least twice the unmanned aerial vehicle's internal propulsion mechanism.

These and further and other objects and features of the invention are apparent in the disclosure, which includes the above and ongoing written specification, as well as the drawings.

### BRIEF DESCRIPTION OF THE DRAWINGS

The accompanying drawings, which are incorporated herein and form a part of the specification, illustrate exemplary embodiments and, together with the description, further serve to enable a person skilled in the pertinent art to make and use these embodiments and others that will be apparent to those skilled in the art. The invention will be more particularly described in conjunction with the following drawings wherein:
FIG. 1 shows a launch system for aerial vehicles, according to at least one embodiment of the present disclosure.
FIG. 2 is a schematic diagram of a drivetrain assembly, according to at least one embodiment of the present disclosure.
FIGS. 3A-3B show a power transmission subsystem from a perspective view (FIG. 3A) and a top view (FIG. 3B), according to at least one embodiment of the present disclosure.
FIGS. 4A-4D show a sequence of events for launching an aerial vehicle using a launch system, according to at least one embodiment of the present disclosure.
FIG. 5 shows an assisted takeoff of an aerial vehicle, according to at least one embodiment of the present disclosure.
FIG. 6 is a block diagram of a computing system for operating one or more portions of a system for launching an unmanned aerial vehicle, according to at least one example of the present disclosure.
FIG. 7 is a block diagram of a computing device, according to at least one example of the present disclosure.
FIG. 8 shows an example of a system for implementing certain aspects of the present technology.
FIG. 9 shows a further example of a system for implementing certain aspects of the present technology.

### DETAILED DESCRIPTION

The present invention is more fully described below with reference to the accompanying figures. The following description is exemplary in that several embodiments are described (e.g., by use of the terms "preferably," "for example," or "in one embodiment"); however, such should not be viewed as limiting or as setting forth the only embodiments of the present invention, as the invention encompasses other embodiments not specifically recited in this description, including alternatives, modifications, and equivalents within the spirit and scope of the invention. Further, the use of the terms "invention," "present invention," "embodiment," and similar terms throughout the description are used broadly and not intended to mean that the invention requires, or is limited to, any particular aspect being described or that such description is the only manner in which the invention may be made or used. Additionally, the invention may be described in the context of specific applications; however, the invention may be used in a variety of applications not specifically described.

The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. When a particular feature, structure, or characteristic is described in connection with an embodiment, persons skilled in the art may effect such feature, structure, or characteristic in connection with other embodiments whether or not explicitly described.

In the several figures, like reference numerals may be used for like elements having like functions even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail. Any signal arrows in the drawings/figures should be considered only as exemplary, and not limiting, unless otherwise specifically noted. Further, the description is not to be taken in a limiting sense, but is made merely for the purpose of illustrating the general principles of the invention, since the scope of the invention is best defined by the appended claims.

It will be understood that, although the terms first, second, etc. may be used herein to describe various elements, these elements should not be limited by these terms. These terms are only used to distinguish one element from another. Purely as a non-limiting example, a first element could be termed a second element, and, similarly, a second element could be termed a first element, without departing from the scope of example embodiments. As used herein, the term "and/or" includes any and all combinations of one or more of the associated listed items. As used herein, "at least one of A, B, and C" indicates A or B or C or any combination thereof. As used herein, the singular forms "a", "an," and "the" are intended to include the plural forms as well, unless the context clearly indicates otherwise. It should also be noted that, in some alternative implementations, the functions and/or acts noted may occur out of the order as represented in at least one of the several figures. Purely as a non-limiting example, two figures shown in succession may in fact be executed substantially concurrently or may sometimes be executed in the reverse order, depending upon the functionality and/or acts described or depicted.

As used herein, ranges are used herein in shorthand, so as to avoid having to list and describe each and every value within the range. Any appropriate value within the range can be selected, where appropriate, as the upper value, lower value, or the terminus of the range.

"About" means a referenced numeric indication plus or minus 10% of that referenced numeric indication. For example, the term "about 4" would include a range of 3.6 to 4.4. All numbers expressing quantities of ingredients, reaction conditions, and so forth used in the specification are to be understood as being modified in all instances by the term "about." Accordingly, unless indicated to the contrary, the numerical parameters set forth herein are approximations that can vary depending upon the desired properties sought to be obtained. At the very least, and not as an attempt to limit the application of the doctrine of equivalents to the scope of any claims, each numerical parameter should be construed in light of the number of significant digits and ordinary rounding approaches.

The words "comprise," "comprises," and "comprising" are to be interpreted inclusively rather than exclusively. Likewise, the terms "include," "including," and "or" should all be construed to be inclusive, unless such a construction is clearly prohibited from the context. The terms "comprising" or "including" are intended to include embodiments encompassed by the terms "consisting essentially of" and "consisting of." Similarly, the term "consisting essentially of" is intended to include embodiments encompassed by the term "consisting of." Although having distinct meanings, the terms "comprising," "having," "containing," and "consisting of" may be replaced with one another throughout the description of the invention.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Wherever the phrase "for example," "such as," "including" and the like are used herein, the phrase "and without limitation" is understood to follow unless explicitly stated otherwise.

"Typically" or "optionally" means that the subsequently described event or circumstance may or may not occur, and that the description includes instances where said event or circumstance occurs and instances where it does not.

In general, the word "instructions," as used herein, refers to logic embodied in hardware or firmware, or to a collection of software units, possibly having entry and exit points, written in a programming language, such as, but not limited to, Python, R, Rust, Go, SWIFT, Objective-C, Java, JavaScript, Lua, C, C++, or C#. A software unit may be compiled and linked into an executable program, installed in a dynamic link library, or may be written in an interpreted programming language such as, but not limited to, Python, R, Ruby, JavaScript, or Perl. It will be appreciated that software units may be callable from other units or from themselves, and/or may be invoked in response to detected events or interrupts. Software units configured for execution on computing devices by their hardware processor(s) may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. Generally, the instructions described herein refer to logical modules that may be combined with other modules or divided into sub-modules despite their physical organization or storage. As used herein, the term "computer" is used in accordance with the full breadth of the term as understood by persons of ordinary skill in the art and includes, without limitation, mainframe computers, servers, desktop computers, laptop computers, embedded computers, tablets, smartphones, handheld computing devices, and the like.

In this disclosure, references are made to users performing certain steps or carrying out certain actions with their client computing devices/platforms. In general, such users and their computing devices are conceptually interchangeable. Therefore, it is to be understood that where an action is shown or described as being performed by a user, in various implementations and/or circumstances the action may be performed entirely by the user's computing device or by the user, using their computing device to a greater or lesser extent (e.g. a user may type out a response or input an action, or may choose from preselected responses or actions generated by the computing device). Similarly, where an action is shown or described as being carried out by a computing device, the action may be performed autonomously by that computing device or with more or less user input, in various circumstances and implementations.

In this disclosure, various implementations of a computer system architecture are possible, including, for instance, thin client (computing device for display and data entry) with fat server (cloud for app software, processing, and database), fat client (app software, processing, and display) with thin server (database), edge-fog-cloud computing, and other possible architectural implementations known in the art.

Generally, the present disclosure is directed towards devices, systems, and methods for launching or setting in motion a fixed wing ("FW") aerial vehicle. In particular, the disclosure is directed to a launch system for a FW unmanned aerial vehicle ("UAV") without a conventional runway. At least one embodiment of the launch system may be referred to herein as a "Modular Kinetic Launch System" ("MKLS").

At least as used herein, the term "unmanned aerial vehicle" refers to a vehicle or craft that flies or otherwise moves through the air without any human present within the vehicle or craft. Thus, in at least one example, a UAV does not have any human pilot, crew, and/or passengers. A UAV may be, for instance, controlled remotely by a human operator and/or operated autonomously (e.g., via pre-programmed computer instructions). However, the UAV may carry one or more items of cargo or other physical objects. The UAV may be, for instance, powered with one or more on-board power sources.

At least one embodiment of the disclosure is a launch system for one or more UAVs that comprises a track, a carriage that moves along the track, one or more energy storage units, and one or more power transmission units. In at least one example, the carriage may be any shape or size that can carry the UAV, and the track may comprise a tube that extends from a support structure (e.g., similar to other constructed tracks known in the art, such as, for instance, amusement park rides). In at least one example, the carriage may carry two lighter UAVs side-by-side. As a non-limiting example, the carriage is custom-made for a specific size, shape, and/or type of UAV, and may comprise a multiple-wheeled (e.g., three-wheel) bogey arrangement disposed around, and/or attached to, tubular tracks. The track may comprise one or more rails to move the carriage. For instance, the track may be split at one or more places to allow simultaneous loading and/or readying of the UAV and/or launching thereof. Such splitting may comprise, for instance, one or more switches to switch the carriage along one or more different portions and/or lengths of track. A UAV may sit on, or otherwise be disposed on or in, the carriage. A UAV may be launched in serial fashion by being moved along the track to one or more appropriate launch velocities, which are decided and/or calculated based on the specific model or type of UAV and/or other parameters (e.g., distance to be traveled, take-off speed to be attained, allowable acceleration rate, etc.). In at least one example, the launch velocity may be decided and/or calculated by one or more algorithms that control launch acceleration of the UAV based on the transfer of power from the drivetrain to the UAV itself. The one or more algorithms can be based on inputs such as, for instance, the weight of the UAV and its target velocity, outputting a necessary torque value on a winch drum that is required to achieve a specific acceleration rate. Additional inputs may include, for example, friction in one or more portions of the launch system. One or more feedback controls can also be used to apply more torque if the aforementioned acceleration is below an expected value. In at least another example, the launch velocity may be decided and/or calculated without respect to acceleration of the UAV along the track by, for instance, ensuring that the UAV achieves a certain speed at a pre-determined distance along the track in order to launch into the air.

The energy storage may, in at least one embodiment, comprise one or more flywheels. In at least a further embodiment, the energy storage is provided by electrical energy stored in one or more batteries and/or capacitors. The amount of energy required for launch must be taken from the energy store and transmitted in a precise manner to the winch drum and downstream to the cable embedded in the track. In the flywheel energy storage embodiment, one or more auxiliary electrical motors, mechanical clutches, and torque converters are employed in the transmission unit. Energy stored in the energy storage released via the transmission unit may then be transmitted to the one or more UAVs through a winch drum that can run a cable to the carriage on the track, thereby launching the UAV within a pre-determined time frame (e.g., less than 2 seconds). Launch time may, in at least some examples, be synonymous with an average acceleration rate, which can determine the length of the track needed. Thus, in at least these examples, faster launch times can be used to achieve launch in a pre-determined distance. The winch drum may be, for instance, a portion of the drivetrain assembly. Such a drum may comprise using known winches and cables to pull the carriage as the winch is reeled in. The time frame can be adjusted based on or more parameters, such as, for instance, the size of the UAV, the aforementioned launch velocity, the launch tempo desired, and the like.

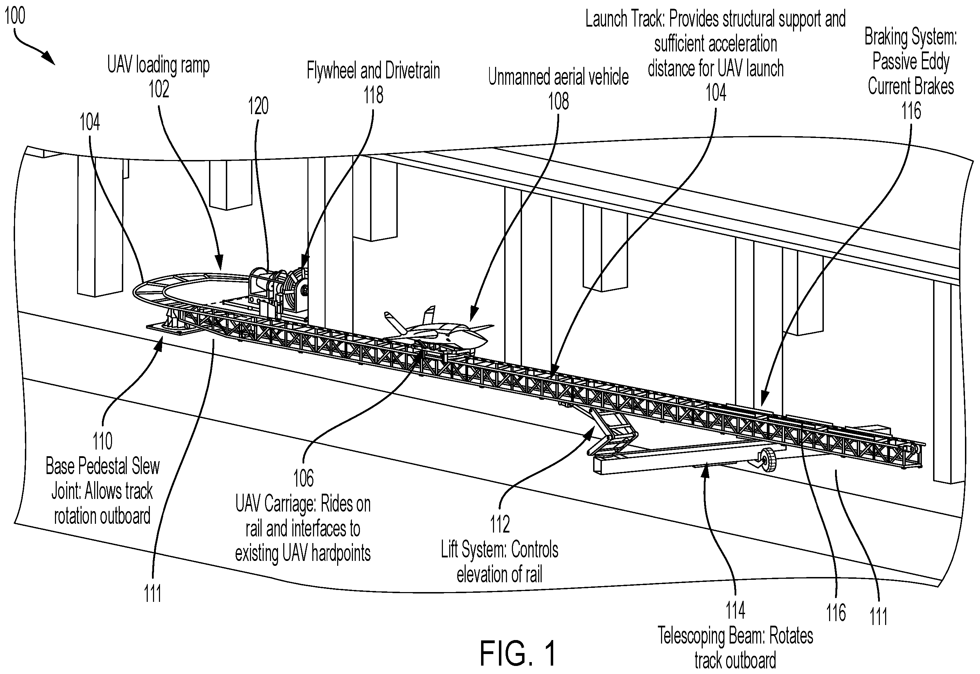

At least one embodiment of the disclosure can launch a plurality of UAVs sequentially, with each UAV being launched as quickly as possible after the previous launch (e.g., in less than, for instance, five minutes of time measured from the previous launch, or less than three minutes of time measured from the previous launch, or less than two minutes of time measured from the previous launch, which is the current standard for at least some carrier-based launches of manned aircraft). The energy required to launch any given UAV in the plurality of UAVs is accumulated, released (thereby launching the UAV), and replenished within the aforementioned five minutes, three minutes, two minutes or less. The actual launch of the UAV itself (from the time force begins to be applied to the UAV to accelerate it until the UAV is flying unaided) may be about 1.5 seconds. Turning now to FIG. 1, an MKLS launch system 100 is disclosed. The launch system comprises a loading ramp 102 that is connected to a track 104. A carriage 106, which carries UAV 108, can move up the loading ramp 102 and move along the track 104. A base pedestal slew joint 110 allows rotation of the track 104 in one or more directions (e.g., outboard relative to a surface 111, such as a ship deck, on which the track is disposed). This surface 111 could be on land or any vehicle or craft for launching UAVs (e.g., a ship, boat, aircraft carrier, etc.). The carriage 106 rides on the track 104 and/or one or more portions thereof (e.g., one or more rails on the track 104) and interfaces with existing UAV hardpoints. Generally, aircraft are designed to be as light as possible and optimized around the forces experienced during flight (e.g., lift, drag, etc.). Thus, UAVs can have one or more hardpoints that interface and/or connect with the launcher in order to transmit launch loads directly on to the structure of the vehicle. In at least one example, the hardpoints also provide reinforcement to the structure of the UAV to be able to withstand the loads during the launch. Such loads can be much higher than the UAV would experience during flight.

In at least one embodiment, the track 104 not only enables movement of the carriage 106 and the UAV 108, but also provides structural support for the carriage 106 and/or the UAV 108. In at least one example, the track serves as a guide for the carriage and UAV carried by the carriage and supports the weight of the carriage and the UAV. However, in at least one example, the track does not react to the loads generated by the launch event itself (e.g., cable tensions).

The track 104 may be of any length necessary, though far shorter than a conventional runway, for launching the UAV 108 at a pre-determined launch velocity and/or acceleration distance. In at least one example, the track can be scaled down to be shorter for smaller UAVs (e.g., 20-50 feet). In at least another example, the track for launching larger UAVs could be about 500 feet or less. In at least one embodiment, a lift system 112 is attached and/or physically connected to one or more portions (e.g., an underside) of the track 104. The lift system 112 can control the elevation of one or more sections of the track 104. In at least one example, the lift system is a known screw jack and lineage system. In at least another example, the lift system is a known actuator-type system that structurally supports the track while changing its length. The lift system 112 may be powered by one or more power sources to raise and/or lower the one or more sections of the track 104 vertically relative to surface 111. In at least one example, the base of the track comprises a pedestal (e.g., as part of base pedestal slew joint 110) that can be rotated to control orientation of the lift system and further comprises one or more hinge connections and/or hinges as part of the slew joint to permit portions of the structure (e.g., the one or more sections of track 104) to elevate with respect to the surface 111.

In at least one embodiment, the lift system 112 is attached and/or physically connected to a telescoping beam 114 that can rotate one or more sections of the track 104. In at least one example, the beam is a known beam that is used for shipboard installment of the lift system 112 to allow the UAV to launch from a ship (e.g., in a direction away from the ship) and/or be stowed within one or more interior spaces or areas within the ship. In these various examples, the beam 114 may also be powered by one or more sources, which may be the same as, or different from, the one or more sources that power the lift system 112, to move and/or rotate the one or more sections of the track 104 horizontally relative to surface 111. Thus, the beam 114 can rotate the track 104 (and/or the carriage 106 and/or the UAV 108) about slew joint 110 outboard relative to surface 111. As described above herein, the beam 114 can, in at least one example, rotate outboard to allow launch of the UAV from the surface 111 and/or the ship on which the lift system 112 is installed (e.g., in a direction away from the ship and/or surface 111). The beam 114 can also rotate the track back inboard relative to surface 111.

In at least one embodiment, braking system 116 is disposed on the track 104 to slow down and/or stop the carriage 106 (e.g., after the UAV 108 has been launched). The braking system 116 may comprise one or more brakes and/or different types of brakes, such as, for instance, known passive Eddy current brakes, friction brakes, and the like.

In at least one embodiment, the launch system 100 further comprises one or more energy storage units (e.g., one or more flywheels 118) and drivetrain assembly 120. The flywheel 118 enables storage of the amount of energy necessary to accelerate and/or launch one or more UAVs 108. In at least one example, the flywheel 118 provides various benefits over pneumatic, hydraulic, and/or electromagnetic energy storage. These benefits include, for instance, (1) reduced complexity, (2) reduced cost, (3) increased suitability for a marine environment (e.g., for shipboard operations or operations near a saltwater environment where corrosion is a concern), (4) improved scalability, (5) reduced time to re-energize between launch events, (6) increased energy density in terms of both volume and weight, and/or (5) ease of maintenance.

In at least one embodiment, the flywheel 118 is able to spin up via a relatively small motor (also referred to herein as a "spin-up motor"), which may be powered by a generator or may run off of a ship's power (e.g., a ship on which the launch system is disposed). In at least one example, the above-mentioned relatively small motor refers to a motor of about 500 horsepower or less (e.g., about 10 horsepower to about 500 horsepower, including about 10 horsepower to about 20 horsepower, about 20 horsepower to about 200 horsepower, about 200 horsepower to about 500 horsepower, or any other range therein), which is generally small relative to the amount of energy required for a UAV launch. Though larger and/or more powerful motors could be used, such motors would lose the advantage of a relatively small motor; for instance, such large motors would need dedicated high voltage and/or amperage circuits and need to be custom designed and built, which the small motor does not. Therefore, the small motor may not be used to launch the UAV directly, but rather to run over a period of time (e.g., about five minutes) to input energy into the flywheel 118. Then, a pre-determined portion of that energy (e.g., about 20%) is used in any single UAV launch. That energy can be expended over a period of about two seconds or less (e.g., about 1.7 seconds or less).

In at least one embodiment, the drivetrain assembly 120 comprises a spin-up motor, one or more friction clutches, one or more torque converters, and a launch drum. The spin-up motor can be configured to start the launch system 100 from zero velocity to a maximum speed of the flywheel 118 in about 5 minutes or less. In at least one example, the time period may be about 3 minutes or less. Thus, in at least one example, the spin-up motor can start the launch system 100 in about the same time period as necessary to load the UAV and/or prepare the UAV for launch, which may necessarily differ depending on the type of UAV, the type of mission for which the UAV is being used, etc. The flywheel generally holds multiples of the necessary energy to launch the UAV 108, such that the flywheel does not slow down to below the necessary winch drum rotational velocity at the UAV release. In at least one example, the flywheel takes 60 seconds or less to spin back up after a given UAV launch. The time period for the flywheel to spin back up may also be about the same time period as necessary to load the subsequent UAV and/or prepare this subsequent UAV for launch, which, as described above, may necessarily differ depending on the type of UAV, the type of mission for which the UAV is being used, etc.

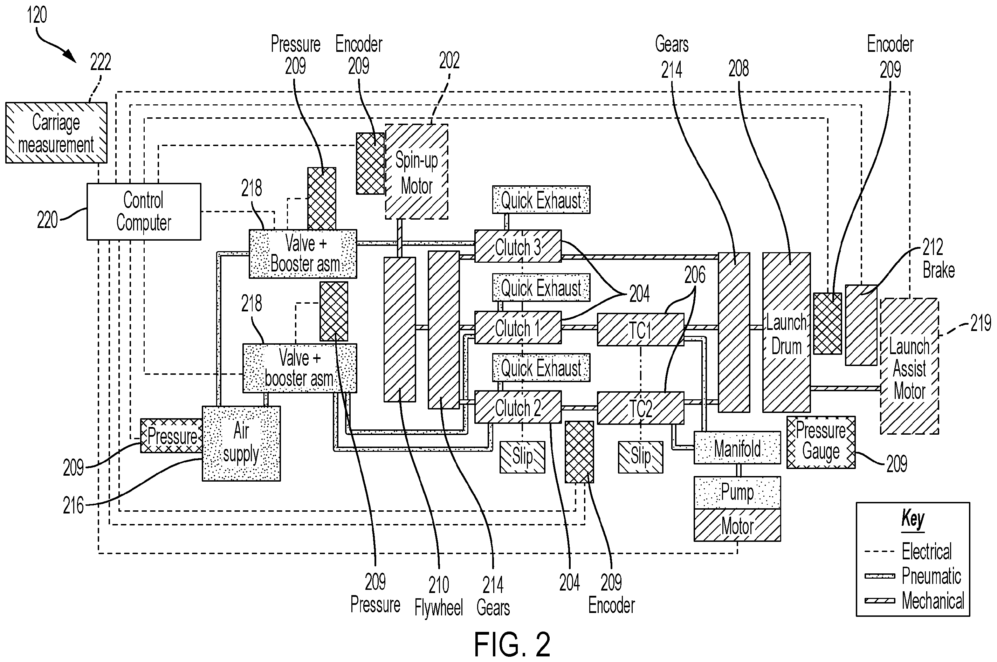

Turning now to FIG. 2, a schematic diagram of the drivetrain assembly 120 is shown. As stated above herein, the assembly 120 comprises a spin-up motor 202, one or more pneumatic clutches 204, one or more torque converters 206, a launch drum 208, and sensors 209 that provide feedback data for control purposes. Flywheel 210 is also shown, as described above herein. A brake system 212 (e.g., having one or more Eddy current brakes as described above herein and final supplemental friction brake) is used to slow down and stop the carriage (e.g., carriage 106). Various gears 214 are used for operating the clutches 204, the torque converters 206, the launch drum 208, and the flywheel 210. Air supply 216 and valve and booster systems 218 are used to operate the clutches 204, while the torque converters 206 are passive. Start-up motor 219, which can have a range of between 0 to 1,000 rotations per minute (RPM) provides additional launch assistance for the UAV. As shown, sensor 209 provides feedback data regarding this start-up motor 219. Further, control computer 220 can control and/or receive information from one or more portions of the drivetrain assembly as shown, via known electrical connectors/interfaces. Carriage measurement device 222 is used to ensure the carriage is moving along the track at an appropriate speed and/or acceleration such that the carriage reaches the desired launch velocity at the pre-determined point or range along the track. In at least one example, the carriage measurement device 222 is or includes a range finder (e.g., a laser range finder) that is pointed at the back of the carriage. In at least a further example, the measurement device 222 is or includes an encoder (e.g., a linear encoder) on the winch drum to measure winch rotations and estimate the position of the carriage, factoring in error based on the cable stretch.

Additionally, as described above herein, the drivetrain assembly (e.g., assembly 120) may comprise an auxiliary assist motor coupled directly to the launch drum 208 (and specifically, to a shaft of the drum) or connected via a clutch, depending on the type of motor and the motor characteristics. The auxiliary assist motor can be a similar size to the flywheel motor so as not to require significantly more instantaneous power draw. The auxiliary assist motor may be energized initially to start the rotation of the drum during the period of highest differential speed between the flywheel (e.g., flywheel 210) and drum. Once a certain speed ratio between the drum and flywheel is achieved, the clutches (e.g., clutches 204) engage to add power from the flywheel. When setting this variable at, for example, 20%, and with a taper on the drum, the flywheel is still be responsible for inputting more than 95% of the total energy, but the clutches skip the least efficient region of power transmission. In such embodiments, the inclusion of the auxiliary motor may negate the need for the torque converters (e.g., converters 206). Further, the auxiliary motor may act to give precision feedback adjustments and as a brake on the drum during the carriage deceleration.

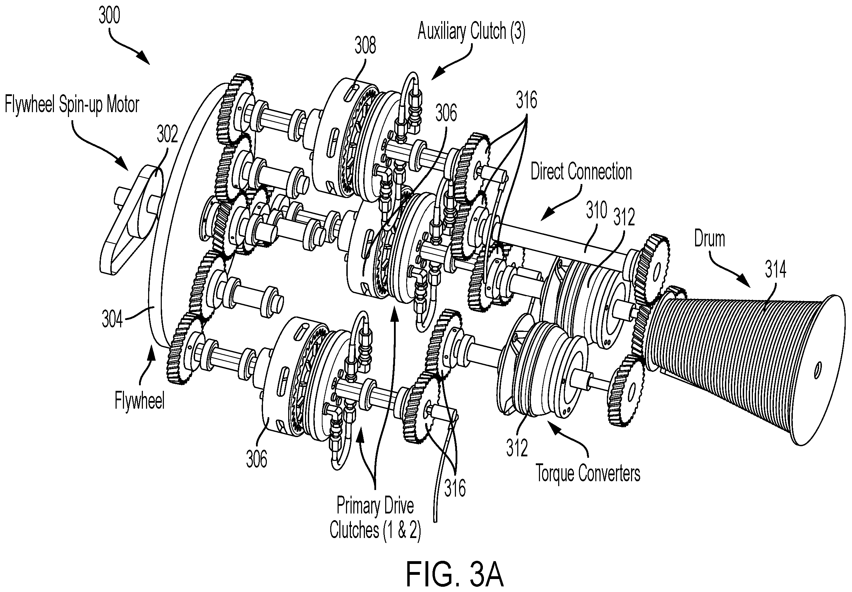

A single sub-shaft can be used for the pneumatic clutch and/or torque converter. Alternatively, the pneumatic clutches and torque converters may be split into a plurality of sub-shafts, as shown in further detail below herein with respect to FIGS. 3A-3B. This enables the torque converters to act essentially as open loop power transmissions once the clutches "lock." One or more of the sub-shafts can be actuated depending on the specific UAV 108 launched. For instance, fewer sub-shafts can be actuated for smaller UAVs to ensure that such UAVs are not over-accelerated. Additionally, clutches and torque converters are most efficient at different speeds, so the plurality of sub-shafts permit the gear ratios to be tuned to have the flywheel 118, the clutches, and the torque converters all operating in their most efficient regions for any given UAV launch. Maintenance and replacement of smaller components (e.g., the sub-shafts) is also less expensive, easier, and faster. Finally, the redundancy provided by the sub-shafts can permit a successful launch even in the event of a single sub-shaft failure (e.g., in the clutch and/or torque converter).

In at least one embodiment, the system 100 comprises different arrangements and/or ratios of the plurality of sub-shafts. The clutches and/or torque converters, and/or the one or more sub-shafts, may be pneumatically actuated, although other actuation mechanisms and/or types of clutches are possible. In at least one example, the torque converters are not actuated, either pneumatically or otherwise, but are rather passive power components that use hydraulic fluid as slip interfaces. In at least another example, different types of clutches can be used, such as, for instance, hydraulic, electromagnetic, and the like.

Turning now to FIG. 3A, flywheel 304 and flywheel spin-up motor 302 and power transmission subsystem 300 are shown, which includes one or more portions of the drivetrain assembly as shown in FIG. 2. Specifically, the power transmission subsystem 300 comprises primary drive clutches 306, auxiliary clutch 308, connector 310, torque converters 312, launch drum 314, and gears 316. The motor 302 may be similar to, or the same as, any other motor described herein (e.g., motor 202). The flywheel 304 may also be similar to, or the same as, any other flywheel described herein (e.g., flywheel 210). The primary drive clutches 306 may be pneumatic clutches. The auxiliary clutch 308 bypasses the torque converters 312 and may allow more precise application of torque based on the pressure applied at the clutch, thereby providing increased feedback control. The one or more torque converters 312 may be similar to, or the same as, any other torque converter described herein (e.g., converters 206). Launch drum 314 may also be similar to, or the same as, any other launch drum described herein (e.g., launch drum 208). Direct connector 310 connects the auxiliary clutch 308 and the launch drum 314. Gears 316 separate the shafts for the clutches 306 and the torque converters 312, allowing for air to be pumped down the clutch shafts. In at least one example, once a sub-shaft between a clutch and a torque converter matches speed, the power transmission subsystem 300 loses the ability to add power. In the aforementioned at least one example, the torque converters 206 are passive and can act as an open-loop control. Further, power capacity is a function of input speed. Accordingly, the clutches 306 and/or 308 apply torque across a slip junction until the input and output speed match, at which point, the clutches "lock up" and can act as a power transmission shaft. This means that all of the slip is happening at the torque converter interface. Adding more pressure to the clutches therefore would not change the applied power, and removing pressure also would not change the applied power until the point at which the clutches disengage. Clutch input and output speeds can therefore be matched so that an increase in pressure does not increase torque transmission.

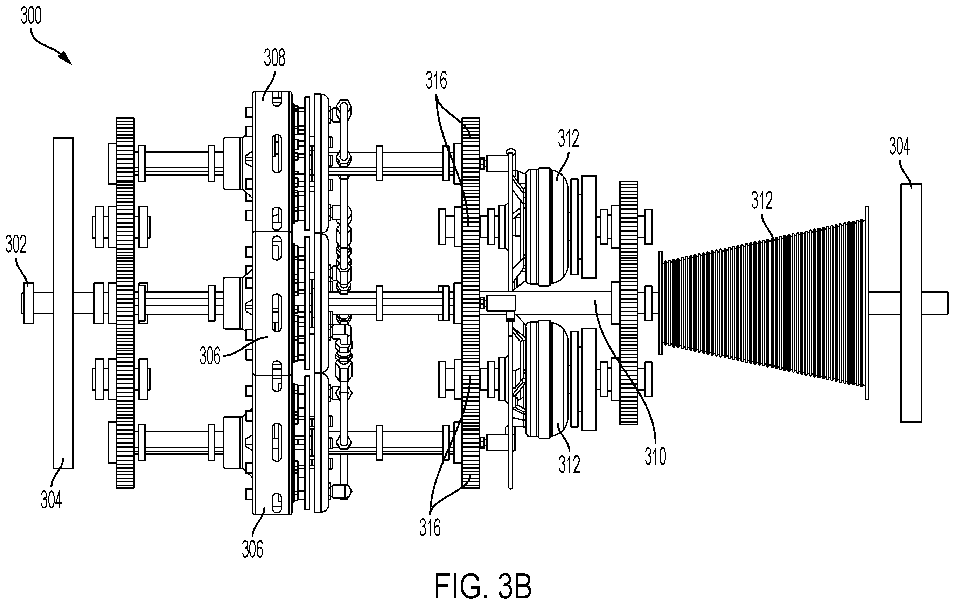

FIG. 3B is another diagram of the power transmission subsystem 300, shown from a top view. As in FIG. 3A, the subsystem 300 shown in FIG. 3B comprises a spin-up motor 302 for the flywheel 304, primary drive clutches 306, auxiliary clutch 308, connector 310, torque converters 312, launch drum 314, and gears 316.

At least one embodiment of the launch system described herein improves the theoretical efficiency of power transmission to the UAV (e.g., UAV 108). The maximum theoretical efficiency of a purely friction-based clutch system turning a constant diameter drum is only around 50%. To achieve improved efficiency, the system 100 can comprise the torque converter and a variable diameter drum, both described above herein. Although it is generally known that a torque converter can use a fluid interface to transmit torque between rotating elements at a much higher efficiency than a friction clutch, the variable diameter drum in at least one embodiment can allow the drum to spin up faster at the start of a given UAV launch, which is when energy losses are highest.

As described above herein, one or more UAVs, including different types of UAVs, may be launched using at least one embodiment of the disclosure. Such UAVs include, for instance, fixed-wing UAVs that can be launched both from land and from a ship, boat, or other marine vehicle. A non-limiting example of a UAV is the Kratos Valkyrie XQ-58, which has a maximum takeoff weight of 6,000 pounds, and a necessary release velocity of 150 knots indicated airspeed (KIAS). In the non-limiting example of launching a UAV on the surface of a ship or other marine vehicle, in which there may be less than 300 feet of space available for launching, substantial mechanical energy must be transferred to the UAV in a short period of time. In the case of multiple, sequential UAV launches, this energy must be replenished and the system reset and ready for the next UAV launch as quickly as possible (e.g., in less than, for instance, two minutes of time). The current standard for at least some carrier-based launches of manned aircraft is to launch in two minutes or less. Thus, at least one embodiment of the disclosure meets the aforementioned requirements. For instance, as mentioned above herein, the launch system may comprise a flywheel for energy storage and/or transmission. Such a flywheel can provide a major advantage in system reset time, since the only input required to reset the system after a given UAV launch is electrical power to add more energy to the flywheel.

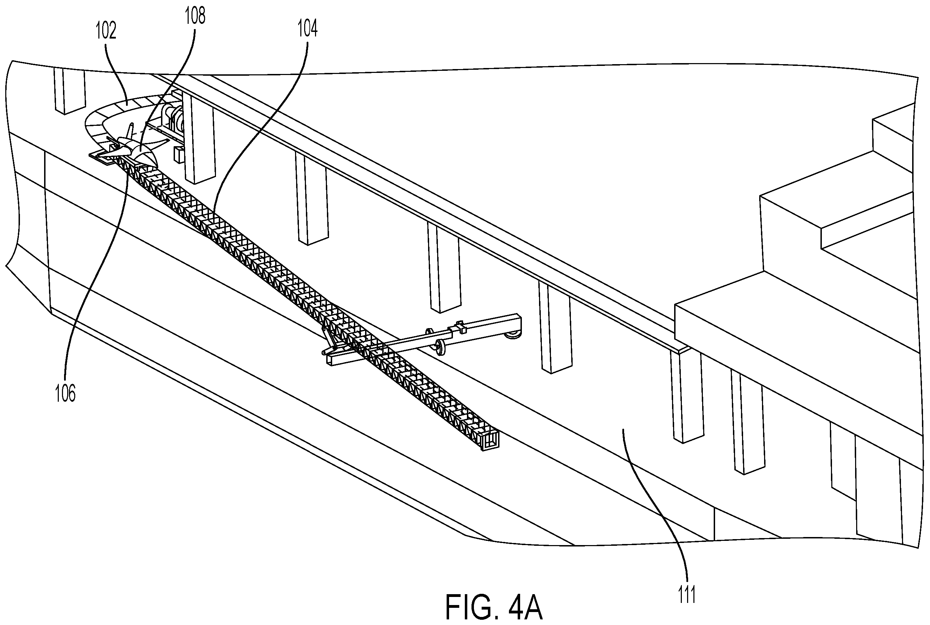

In at least one embodiment, a UAV is launched according to the following sequence, and using any of the launch devices and/or systems described herein, including, for instance, launch system 100 described in FIG. 1. In order to launch UAV 108 from surface 111 (which could be on any vehicle or craft for launching UAVs, such as, for instance, a ship, boat, aircraft carrier, or the like), UAV 108 is first loaded on to track 104 using loading ramp 102, as shown in FIG. 4A. The UAV is disposed on a carriage 106. Once the decision is made to launch the UAV, the carriage 106 and the UAV 108 proceed down the track 104 via, e.g., application of cable tension in a known fashion. Acceleration of the carriage 106 and the UAV 108 may approach, for instance, about six times the force of gravity (6g).

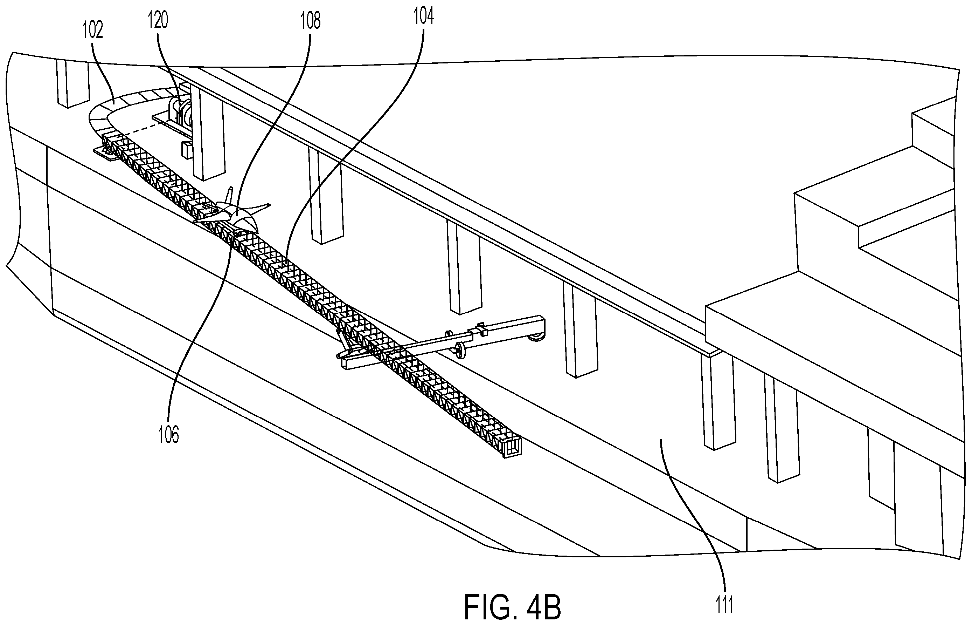

Subsequently, as shown in FIG. 4B, the drivetrain assembly 120, through operation of the clutches, as described above herein with respect to FIGS. 2-3, ensures that the carriage 106 reaches a pre-determined launch velocity for the UAV 108 at a pre-determined release point or range along the track 104. A control computer is input the UAV launch weight and desired release velocity by the operator. In one embodiment, the weight of the UAV may be measured directly during the process of loading the UAV on to the carriage. Based on the characteristics of the power transmission components of the drivetrain (e.g., the clutch's expected torque as a function of pressure, the torque converter output as a function of input speed and speed differential, etc.) and starting flywheel speed, a profile of the pressure command to the clutches is generated and an expected output profile of the drum rotational velocity and corresponding UAV speed is also generated to match the desired release speed at the position where the carriage enters the braking zone. The initial command of the clutches is given and the carriage with UAV accelerates down the track. The system monitors the actual speed of the drum versus the expected speed of the drum at each position and adjusts the clutch pressure command based on the difference between the actual performance and expected performance (which can be defined as underperformance or overperformance with respect to the expected curve). The increase or decrease in clutch pressure command ensures the UAV velocity at release is within a pre-determined margin of error.

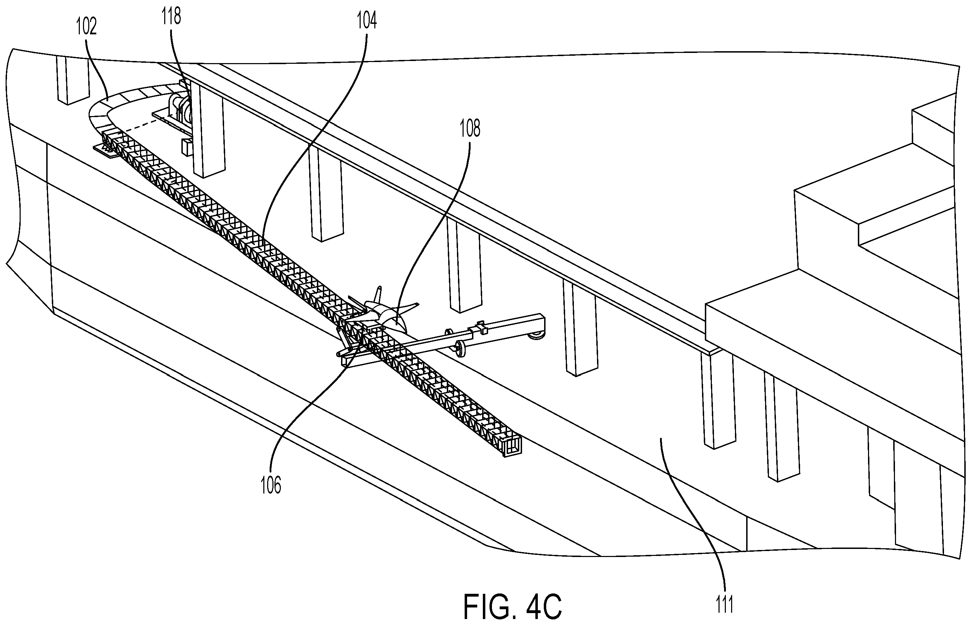

FIG. 4C shows when the UAV 108 is about to be launched free from the carriage 106. The braking system 118 begins to decelerate the carriage 106, as described above herein. The clutches (e.g., as described above herein with respect to FIGS. 2-3), disengage, and the UAV 108 is launched free from the carriage 106 and away from the surface 111.

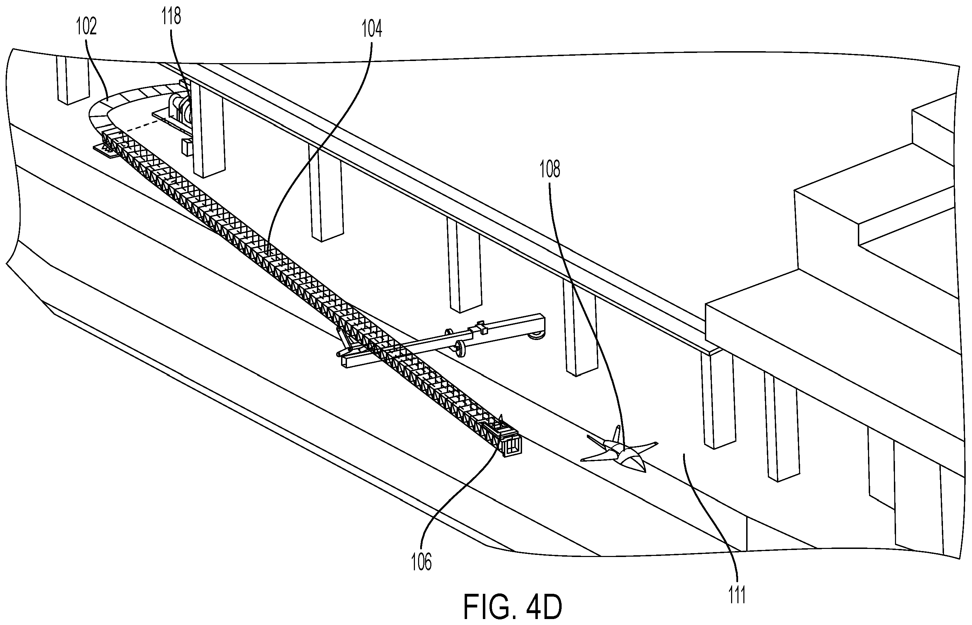

Once the UAV 108 has been launched, as shown in FIG. 4D, braking system 118 brings the carriage 106 to a stop along the track 104 using, for instance, one or more Eddy current brakes, as described above herein. Further, in at least one example, known mechanical spring dampers may also be used to assist in bringing the carriage 106 to a stop along the track 104.

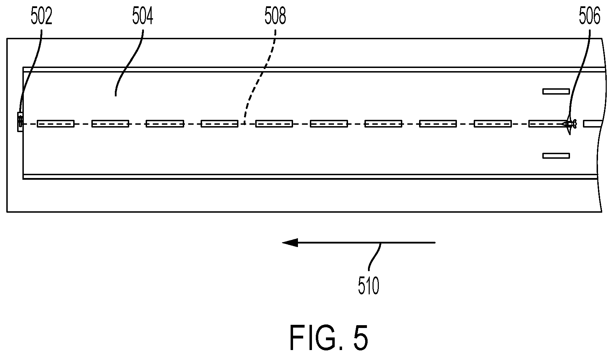

In at least one embodiment of the disclosure, there is no launch rail and track. Instead, a launch cable is run along a traditional runway and terminated at a launch carriage underneath the UAV with a traditional landing gear arrangement. This embodiment assists the UAV and allows it to takeoff in a distance significantly shorter than it otherwise would solely under its own power. In general, conventional runways are about 6,500 feet. Some large UAVs that rely on RATO for takeoff would need over 8,000 feet of runway to takeoff, and would therefore require a specialized runway, thereby negating many of the advantages of fielding larger numbers of UAVs. An assisted takeoff device according to the at least one embodiment could therefore reduce the required runway distance to about 1,500 feet, significantly expanding the range of fieldable locations (e.g., to even include stretches of straight roadway). Turning now to FIG. 5, the aforementioned at least one embodiment enabling assisted takeoff of a UAV is shown. Drivetrain 502 is disposed at one end of runway 504. A device, such as a hook device (not shown), is used to connect the drivetrain 502 to a front gear of UAV 506 via cable 508. The UAV 506 is then pulled for around the first 1,000 feet of the takeoff (direction 510). This accelerates the UAV at about 1G, as opposed to about less than 0.3G of the engine alone, and reduces the takeoff distance from about 6,500 feet under the UAV's own power to only about 1,200 to 1,500 feet with the assisted takeoff. Thus, the cable-pulling device can accelerate the UAV at a force of at least twice an amount of force the UAV's internal propulsion mechanism(s) can provide. After the first about 1,000 feet of acceleration, the clutches disengage and the cable 508 goes slack. Thus, as the UAV continues to accelerate itself forward in direction 510, the UAV comes free of the hook and the cable 508 falls away. As described above herein, at least one embodiment of the disclosure is used for runway-less launching of UAVs, including, for instance, UAVs weighing as little as 250 pounds (Group 3 UAVs) and UAVs weighing up to 10,000 pounds (Group 5 UAVs), sequentially over a short period of time. Currently, UAVs in Groups 4 and 5 (greater than 1,300 pounds) are unable to be launched by a portable launching system. Such heavy UAVs can only be launched via either (1) a conventional runway takeoff with landing gear, (2) Rocket-Assisted Take-Off ("RATO"), or (3) an embedded catapult in a traditional aircraft carrier. Further, portable pneumatic launchers fail to scale to heavy UAVs for three reasons. First, the launch profile of a pneumatic launcher always includes a violent impulse at the start of launch. This impulse is a function of the weight and the loads will go up as the mass increases. The electronics and instrumentation payload of a UAV generally has a fixed acceleration limit (about 10-15 times the force of gravity (about 10-15G), depending on the type of instrument) and therefore higher impulses for larger UAVs will exceed this limit. Second, compression of air to charge the launcher does not scale well as the volume of the pressurized container goes up. While a small launcher might only take a few minutes to recharge a volume of air for a launch, for a large amount of energy such as the roughly 10 megajoules (MJ) required for a heavy UAV launch, a compressor with the same power draw as the flywheel spin-up motor would take more than 30 minutes to re-pressurize the tank, as opposed to the about 45-50 seconds of the flywheel. Third, pneumatic launchers are essentially open loop launchers and feedback control of the power applied is not possible. A valve is opened and the compressed air powers a piston. Larger launchers require more precise control over the longer acceleration time to hit the appropriate release velocity.

One or more of the embodiments described herein can be implemented on one or more computing systems, as described in further detail below.

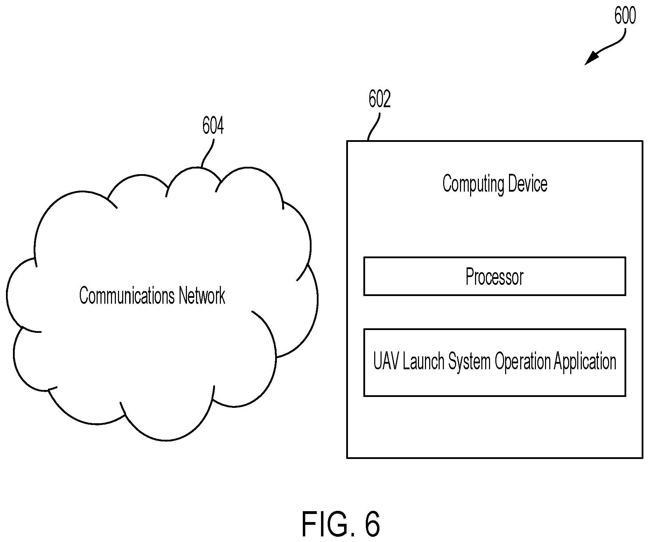

FIG. 6 is a block diagram of a computing system 600 for operating one or more portions of a system for launching an unmanned aerial vehicle, according to an example embodiment. Thus, the computing system 600 may perform, for instance, any of the system operations for launching a UAV described above herein. Such operations include, for example, (1) determining, based on the measured speed of a carriage on which the UAV is disposed, whether the carriage will reach a pre-determined launch velocity for the unmanned aerial vehicle at a pre-determined point or area along the track, and/or (2) controlling the power transmission system to transmit energy to a cable-pulling device until the unmanned aerial vehicle connected to the cable reached a pre-determined point or area of a runway and then cause the cable to disconnect from the unmanned aerial vehicle.

The system 600 comprises one or more computing devices 602 that may execute one or more applications to operate one or more portions of a UAV launch system, as described above herein. Additionally, the applications can be used to send information to, or receive information from, a specific user or users. The applications can further be capable of scheduled or triggered communications or commands when various events occur, for example when the carriage reaches a pre-determined launch velocity at a pre-determined point or area along a track, when the UAV reaches a pre-determined point or area of a runway (e.g., when the UAV is pulled directly by a cable-pulling device), when one or more errors or mechanical issues are triggered during the process of the UAV launch, and the like.

The one or more computing devices 602 can be used to store acquired computational data, as well as other data in memory and/or a database. The memory may be communicatively coupled to one or more hardware processing devices.

The one or more computing devices 602 may further be connected to a communications network 604, which can be the Internet, an intranet, or another wired or wireless communication network. For example, the communication network 1104 may include a Mobile Communications (GSM) network, a code division multiple access (CDMA) network, 3^{rd} Generation Partnership Project (GPP) network, an Internet Protocol (IP) network, a wireless application protocol (WAP) network, a Wi-Fi network, a satellite communications network, or an IEEE 802.11 standards network, as well as various communications thereof. Other conventional and/or later developed wired and wireless networks may also be used.

The one or more computing devices 602 include at least one processor to process data and memory to store data. The processor processes communications, builds communications, retrieves data from memory, and stores data to memory. The processor and the memory are hardware. The memory may include volatile and/or non-volatile memory, e.g., a computer-readable storage medium such as a cache, random access memory (RAM), read only memory (ROM), flash memory, or other memory to store data and/or computer-readable executable instructions related to one or more applications for operating one or more portions of a system for launching a UAV. In addition, the one or more computing devices 602 further include at least one communications interface to transmit and receive communications, messages, and/or signals.

Thus, information processed by the one or more computing devices 602, or the applications executed thereon, may be sent to another computing device, such as a remote computing device, via the communication network 604.

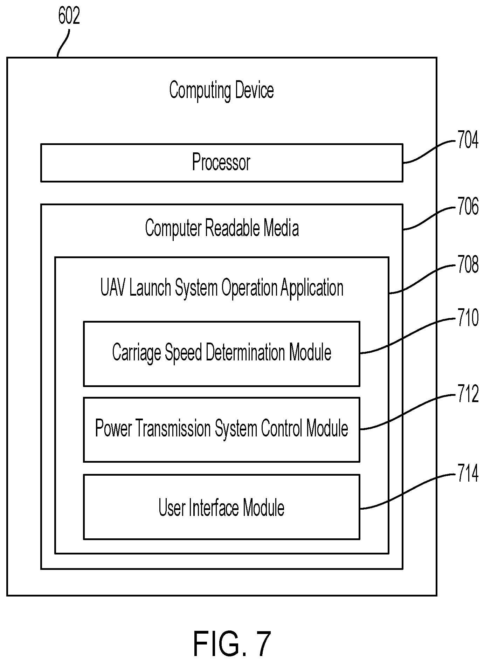

FIG. 7 illustrates a block diagram of a computing device 602 according to an example embodiment. The computing device 602 includes computer readable media (CRM) 706 in memory on which an application for operating one or more portions of a UAV launch system 708 or other user interface or application is stored. The computer readable media may include volatile media, nonvolatile media, removable media, non-removable media, and/or another available medium that can be accessed by the processor 704. By way of example and not limitation, the computer readable media comprises computer storage media and communication media. Computer storage media includes non-transitory storage memory, volatile media, nonvolatile media, removable media, and/or non-removable media implemented in a method or technology for storage of information, such as computer/machine-readable/executable instructions, data structures, program modules, or other data. Communication media may embody computer/machine-readable/executable instructions, data structures, program modules, or other data and include an information delivery media or system, both of which are hardware.

The UAV launch system operation application 708 can include, for example, a carriage speed determination module 710 that is operable to perform various functions, such as, for instance, determining, based on the measured speed of a carriage on which the UAV is disposed, whether the carriage will reach a pre-determined launch velocity for the unmanned aerial vehicle at a pre-determined point or area along the track. The application 708 can further include, for example, a power transmission system control module 712 that is operable to perform various functions, such as, for instance, controlling a power transmission system to transmit energy to a cable-pulling device until the unmanned aerial vehicle connected to the cable reached a pre-determined point or area of a runway and then cause the cable to disconnect from the unmanned aerial vehicle. One or more of the modules 710 and 712 may also be operable to obtain data from other sources, such as a user, a database, and the like, and to process that data to correct for imperfect, inaccurate, or absent calculations, determinations, and/or models regarding one or more aspects of operating a UAV launch system.

Using a local high-speed network, the computing device 602 may receive the aforementioned data in near real time, process the data, and generate calculations. These calculations may be executed by one or more algorithms within the UAV launch system operation application 708 or other stored applications.

Measured or calculated data may be monitored to generate an event and an alert if something is out of range (e.g., one or more calculations, determinations, equations, and/or models is incorrect or throws an error, one or more additional data points or definitions is needed, etc.). Further, one or more alerts may be sent during any point during operation of the UAV launch system, including, for instance, before the UAV is launched, while the UAV is being launched, and/or after the UAV has been launched. Such alerts may be sent in real-time or near real-time using an existing uplink or dedicated link. The alerts may be sent using email, SMS, push notification, or using an online messaging platform to end users and computing devices, among others.

The UAV launch system operation application 708 may provide data visualization using a user interface module 714 for displaying a user interface on a display device. As an example, the user interface module 714 generates a native and/or web-based graphical user interface (GUI) that accepts input and provides output viewed by users of the computing device 602. The computing device 602 may provide real-time automatically and dynamically refreshed information on the operation of one or more portions and/or aspects of a UAV launch system. The user interface module 714 may send data to other modules of the UAV launch system operation application 708 of the computing device 602, and retrieve data from other modules of the UAV launch system operation application of the computing device 602 asynchronously without interfering with the display and behavior of the user interface displayed by the computing device 602.

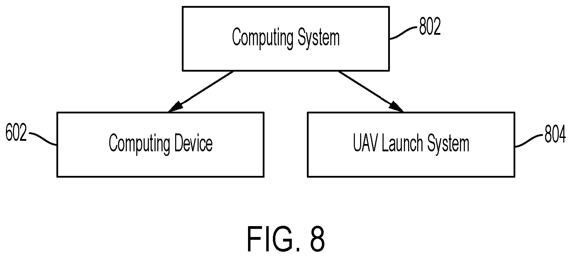

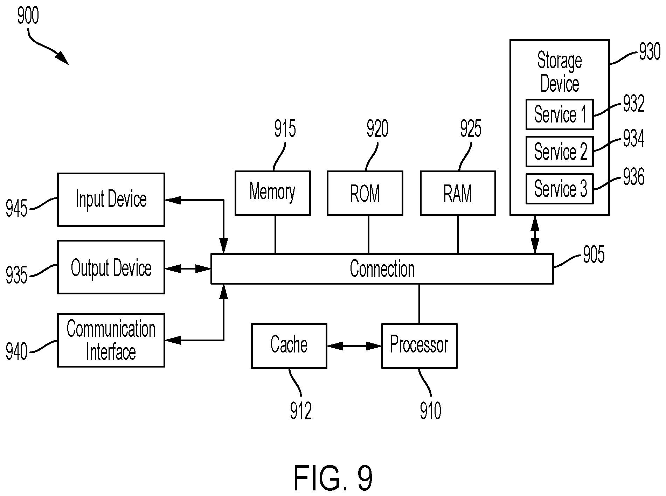

Further, one or more computing systems can implement one or more aspects of the technology and/or methods described herein. FIG. 8 shows an example of such a computing system 802, which may include one or more computing devices (e.g., computing device 602) and/or processing units, which include one or more processors and software. The one or more computing devices (e.g., computing device 602) may execute one or more applications to operate one or more applications, such as, for example, the UAV launch system operation application 708 described above herein, or one or more portions thereof. The computing system 602 may further control, monitor, and/or extract data from, for instance, UAV launch system 804 or any one or more portions thereof. Such launch system 804 may be similar to, or the same as, any launch system described herein. The computing system can further comprise a graphical user interface (GUI) so that a user may control the system or portions thereof, such as, for instance, the UAV launch system 804 or any one or more portions thereof. FIG. 9 shows an example of computing system 900, which can be for example any computing device such as the computing device 602, or any component thereof in which the components of the system are in communication with each other using connection 905. Connection 905 can be a physical connection via a bus, or a direct connection into processor 910, such as in a chipset architecture. Connection 905 can also be a virtual connection, networked connection, or logical connection.

In some embodiments, computing system 900 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices. Example system 900 includes at least one processing unit (CPU or processor) 910 and connection 905 that couples various system components including system memory 915, such as read-only memory (ROM) 920 and random access memory (RAM) 925 to processor 910. Computing system 900 can include a cache of high-speed memory 912 connected directly with, in close proximity to, or integrated as part of processor 910.

Processor 910 can include any general purpose processor and a hardware service or software service, such as services 932, 934, and 936 stored in storage device 930, configured to control processor 910 as well as a special-purpose processor where software instructions are incorporated into the actual processor design. Processor 910 may essentially be a completely self-contained computing system, containing multiple cores or processors, a bus, memory controller, cache, etc. A multi-core processor may be symmetric or asymmetric.

To enable user interaction, computing system 900 includes an input device 945, which can represent any number of input mechanisms, such as a microphone for speech, a touch-sensitive screen for gesture or graphical input, keyboard, mouse, motion input, speech, etc. Computing system 900 can also include output device 935, which can be one or more of a number of output mechanisms known to those of skill in the art. In some instances, multimodal systems can enable a user to provide multiple types of input/output to communicate with computing system 900. Computing system 900 can include communications interface 940, which can generally govern and manage the user input and system output. There is no restriction on operating on any particular hardware arrangement, and therefore the basic features here may easily be substituted for improved hardware or firmware arrangements as they are developed.

Storage device 930 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 930 can include software services, servers, services, etc., that when the code that defines such software is executed by the processor 910, it causes the system to perform a function. In some embodiments, a hardware service that performs a particular function can include the software component stored in a computer-readable medium in connection with the necessary hardware components, such as processor 910, connection 905, output device 935, etc., to carry out the function.

For clarity of explanation, in some instances, the present technology may be presented as including individual functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the disclosures herein can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures. Accordingly, at least one embodiment of the disclosure includes launch devices and/or systems for various aerial vehicles that have one or more of the following features: (1) lighter, cheaper, easier to use, and/or more maneuverable than other forms of catapult or other similar devices, (2) can function only on electrical power and/or does not require large power sources, (3) can launch any size of UAV, including, but not limited to, UAVs with a weight of up to 10,000 pounds, as opposed to conventional systems that can only launch UAVs with a weight of only hundreds of pounds, and (4) can launch UAVs without the need for rocket assisted takeoff (RATO) or large runways. For instance, large and/or long runways may be about 8,000 to 10,000 feet. Thus, at least one embodiment of the disclosure can launch UAVs on runways shorter than 8,000 feet, such as, for instance, standard length runways of about 6,500 feet or less and/or short length runaways of about 4,500 feet or less. In at least one example, the track for launching the UAVs is about 250 feet long or less. These advantages are made possible in large part by the use of a flywheel for energy storage, which is itself enabled by use of an innovative power transmission system that can quickly transfer energy from the flywheel to the mechanism for propelling the UAV, and by the choice of propulsion mechanism- for example a winch drum which simply and reliably converts rotational energy into linear force on the UAV. A flywheel offers advantages over other energy storage options, including simplicity in operation and maintenance, high energy density, fast recharge, small footprint, and ability to work with a modest amount of electrical power only.

These and other objectives and features of the invention are apparent in the disclosure, which includes the above and ongoing written specification.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated.

The invention is not limited to the particular embodiments illustrated in the drawings and described above in detail. Those skilled in the art will recognize that other arrangements could be devised. The invention encompasses every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application. While the invention has been described with reference to specific illustrative embodiments, modifications and variations of the invention may be constructed without departing from the spirit and scope of the invention as set forth in the following claims.

## Claims

1. A system for launching an unmanned aerial vehicle comprising:
a. a flywheel for storing energy;
b. a motor for powering the flywheel;
c. a drum for reeling in a cable attached to the drum, to apply force to accelerate the unmanned aerial vehicle; and
d. a power transmission system for transferring energy stored by the flywheel to the drum.

2. The system of claim 1, wherein the cable attaches to one or more landing gears of the unmanned aerial vehicle.

3. The system of claim 1, wherein the cable attaches to a platform for supporting the unmanned aerial vehicle, and wherein the platform has wheels.

4. The system of claim 1, wherein the cable attaches to a carriage physically disposed on a track, and wherein the carriage is for supporting the unmanned aerial vehicle before and during launch.

5. The system of claim 4, further comprising a measurement device to directly measure a speed of the carriage.

6. The system of claim 5, further comprising at least one computer comprising at least one processor, wherein the at least one processor is operatively connected to at least one non-transitory, computer readable medium having computer-executable instructions stored thereon, wherein, when executed by at least one processor, the computer-executable instructions carry out a set of steps comprising:
a. determining, based on the measured speed of the carriage, whether the carriage will reach a pre-determined launch velocity for the unmanned aerial vehicle at a pre-determined point or area along the track.

7. The system of any of the previous claims, further comprising an encoder on the drum for measuring winch rotations and for estimating a position of a carriage supporting the unmanned aerial vehicle before and during launch.

8. The system of any of the previous claims, wherein the power transmission system comprises one or more clutches and one or more torque converters, wherein the one or more clutches are operated via an air supply and one or more valve and booster systems, and wherein the one or more torque converters are passive and act as an open-loop control.

9. The system of claim 8, wherein a single shaft operates the one or more clutches, and the one or more torque converters are operated by either (i) a single sub-shaft, or (ii) a plurality of sub-shafts.

10. The system of claim 9, wherein only a subset of the plurality of sub-shafts are actuated to launch the unmanned aerial vehicle.

11. The system of any of the claims 8 to 10, wherein the one or more clutches apply torque across a slip junction until a first point is reached where an input speed matches an output speed, wherein, at the first point: (i) the one or more clutches lock and act as a power transmission shaft, (ii) adding pressure to the one or more clutches does not change applied power, and (iii) removing pressure from the one or more clutches does not change the applied power until the one or more clutches disengage.

12. The system of any of the claims 8 to 11, wherein the one or more clutches comprises one or more primary drive clutches and an auxiliary clutch.

13. The system of claim 12, wherein the auxiliary clutch is configured to bypass the one or more torque converters to permit application of torque based on an amount of pressure applied at the auxiliary clutch.

14. A system for launching an unmanned aerial vehicle comprising:
a. a cable for connecting to the unmanned aerial vehicle;
b. a cable-pulling device for pulling the cable;
c. a power transmission system for transmitting energy to the cable-pulling device; and
d. at least one computer comprising at least one processor, wherein the at least one processor is operatively connected to at least one non-transitory, computer readable medium having computer-executable instructions stored thereon, wherein, when executed by the at least one processor, the computer-executable instructions carry out a set of steps comprising: controlling the power transmission system, to transmit energy to the cable-pulling device until the unmanned aerial vehicle connected to the cable reached a pre-determined point or area of a runaway and then cause the cable to disconnect from the unmanned aerial vehicle.

15. The system of claim 14, wherein the device accelerates the unmanned aerial vehicle at a force of at least twice the unmanned aerial vehicle's internal propulsion mechanism.
